# EUROPEAN PATENT APPLICATION

(11) **EP 4 668 080 A1**
(43) Date of publication of application: **24.12.2025**
(21) Application number: 25167858.7
(22) Date of filing: 01.04.2025
(51) Int. Cl.: G06F 3/048, G06F 1/16, G06F 3/00, G06F 3/01, G06F 3/0488, G04G 9/00, G04G 21/00

(54) **APPLICATION CONTROL METHOD AND APPARATUS, COMPUTER DEVICE AND STORAGE MEDIUM**

(30) Priority: 21.06.2024 CN 202410815135
(71) Applicant: Beijing Xiaomi Mobile Software Co., Ltd., Beijing 100085 (CN)
(72) Inventor: CHEN, Kexin, Beijing, 100085 (CN)
(74) Representative: Dehns Germany Partnerschaft mbB

(57) **Abstract**

The present invention provides an application control method and apparatus, a computer device and a storage medium. The method includes: in response to receiving a remote control request, entering a remote control mode; and in response to collecting an application control action initiated by a user and matching a candidate application control action, sending identification information of the application control action to a terminal, so that the terminal executes a response instruction corresponding to the application control action for a target application according to the identification information of the application control action. The above solution enables the user to experience real hands-free operation, that is, the user can frequently control the target application on the terminal without the need of directly operating the terminal device, which improves the comfort and convenience of the user when using the target application in an immersive mode.

## Description

### TECHNICAL FIELD

The present invention relates to the technical field of computers, in particular, to an application control method and apparatus, a computer device and a storage medium.

### BACKGROUND

A terminal application is an application program installed on a terminal, and gradually develops from an initial simple function application to become an important tool for life, work, and entertainment. Nowadays, the terminal application market has millions of application programs, covering almost all fields and industries, and providing users with various functions and services.

Although the development of terminal applications brings many conveniences and functions to users, some terminal applications require users to control the terminal applications to execute corresponding instructions by frequently using fingers to perform operations such as screen swipe and content switching on the terminal. This significantly limits the user's experience and comfort in immersive use of the terminal application.

### SUMMARY

In order to overcome the problems existing in the related art, the present invention provides an application control method and apparatus, a computer device and a storage medium.

According to a first aspect of embodiments of the present invention, the present application provides an application control method. The method includes:
in response to receiving a remote control request, entering a remote control mode, and displaying a remote control window on a display page of a wearable device; and
in response to collecting an application control action initiated by a user on the remote control window and matching a candidate application control action, sending identification information of the application control action to a terminal, so that the terminal executes a response instruction corresponding to the application control action for a target application according to the identification information of the application control action.
In combination with any implementation of the present invention, the method further includes:
in response to receiving a mode selection action initiated by a user on the remote control window and matching a candidate operation mode, determining the candidate operation mode as a target operation mode, and sending identification information of the target operation mode to the terminal;
outputting mode prompt information on the display page to prompt the user that the wearable device has entered the target operation mode;
sending the identification information of the application control action to the terminal in response to collecting the application control action initiated by the user on the remote control window and matching the candidate application control action includes:
in response to collecting the application control action initiated by the user on the remote control window and matching the candidate application control action, sending the identification information of the application control action to the terminal, so that the terminal executes the response instruction corresponding to the application control action for the target application according to the identification information of the application control action and the identification information of the target operation mode.

In combination with any implementation of the present invention, the candidate operation mode includes a swipe operation mode and a mouse operation mode;
the candidate application control action in the swipe operation mode includes a left swipe, a right swipe, an upward swipe, a downward swipe, a single click and a long press acting on a screen, and a short press and a long press acting on the side key;
the candidate application control action in the mouse operation mode includes a single-finger swipe, a two-finger swipe, a single click and a long press acting on the screen, and a short press and a long press acting on the side key.

In combination with any implementation of the present invention, the method further includes:
in response to receiving the application control action initiated by the user on the remote control window and matching the candidate application control action, presenting an operation track of the application control action on the display page;
and/or,
in response to receiving the mode selection action initiated by the user on the remote control window and matching the candidate operation mode, presenting an operation track of the mode selection action on the display page.

In combination with any implementation of the present invention, the method further includes:
in a case of entering the remote control mode, stopping controlling the wearable device according to the application control action collected by the wearable device;
outputting stop control information on the display page to prompt the user to stop controlling the wearable device.

In combination with any implementation of the present invention, the method further includes:
in response to collecting an action matching an exit action, exiting the remote control mode;
hiding the remote control window on the display page, and outputting mode exit information to prompt the user that the wearable device exits the remote control mode.

According to a second aspect of the embodiments of the present invention, the present application provides an application control method.

The method includes:
receiving identification information of an application control action sent by a wearable device, where the identification information is sent to a terminal by the wearable device in response to collecting in a remote control mode the application control action initiated by a user on a remote control window and matching a candidate application control action; and
determining and executing a response instruction corresponding to the application control action for a target application according to the identification information of the application control action, and displaying a target page of the target application under the response instruction on a display page of the terminal.

In combination with any implementation of the present invention, the method further includes:
in response to a currently running application being one of a plurality of candidate applications, determining the currently running application as the target application;
outputting control prompt information and mode recommendation information on the display page, to prompt the user that the target application can be remotely controlled, and to recommend a candidate operation mode corresponding to the target application to a target user.

In combination with any implementation of the present invention, the method further includes:
in response to receiving mode notification information sent by the wearable device, determining that the wearable device has entered the remote control mode;
outputting mode prompt information on the display page to prompt the user that the wearable device has entered the remote control mode.

In combination with any implementation of the present invention, the method further includes:
receiving identification information of a target operation mode sent by the wearable device, where the identification information of the target operation mode is sent by the wearable device when determining, in response to receiving a mode selection action matching a candidate operation mode, the candidate operation mode as a target operation mode;
outputting operation prompt information on the display page to prompt the user that the wearable device enters the target operation mode;
determining and executing the response instruction corresponding to the application control action for the target application according to the identification information of the application control action, and displaying the target page of the target application under the response instruction on the display page of the terminal includes:
determining and executing the response instruction corresponding to the application control action for the target application according to the identification information of the application control action and the identification information of the target operation mode, and displaying the target page of the target application under the response instruction on the display page of the terminal.

In combination with any implementation of the present invention, the method further includes:
in response to receiving an instruction configuration operation input by a user, configuring a mapping relationship between the candidate application control action and the response instruction based on the instruction configuration operation.

According to a third aspect, the present application further provides an application control apparatus, including:
a mode entering module, configured to, in response to receiving a remote control request, enter a remote control mode, and display a remote control window on a display page of the wearable device; and
an action sending module, configured to, in response to collecting an application control action initiated by a user on the remote control window and matching a candidate application control action, send identification information of the application control action to a terminal, so that the terminal executes a response instruction corresponding to the application control action for a target application according to the identification information of the application control action.

In an embodiment, the above application control apparatus further includes:
a mode determining module, configured to, in response to receiving a mode selection action initiated by a user and matching a candidate operation mode, determine the candidate operation mode as a target operation mode, and send identification information of the target operation mode to the terminal; and
a prompt output module, configured to output mode prompt information on the display page to prompt the user that the wearable device has entered the target operation mode;
the action sending module is specifically configured to:
in response to collecting the application control action initiated by the user on the remote control window and matching the candidate application control action, send the identification information of the application control action to the terminal, so that the terminal executes the response instruction corresponding to the application control action for the target application according to the identification information of the application control action and the identification information of the target operation mode.

In an embodiment, the candidate operation mode includes a swipe operation mode and a mouse operation mode;
the candidate application control action in the swipe operation mode includes a left swipe, a right swipe, an upward swipe, a downward swipe, a single click and a long press acting on a screen, and a short press and a long press acting on a side key;
the candidate application control action in the mouse operation mode includes a single-finger swipe, a two-finger swipe, a single click and a long press acting on the screen, and a short press and a long press acting on the side key.

In an embodiment, the above application control apparatus further includes:
a track presenting module, configured to, in response to receiving the application control action initiated by the user on the remote control window and matching the candidate application control action, present an operation track of the application control action on the display page;
and/or,
in response to receiving the mode selection action initiated by the user on the remote control window and matching the candidate operation mode, present an operation track of the mode selection action on the display page.

In an embodiment, the application control apparatus further includes:
a control module, configured to, in a case of entering the remote control mode, stop controlling the wearable device according to the application control action collected by the wearable device;
a control stop module, configured to output stop control information on the display page to prompt the user to stop controlling the wearable device.

In an embodiment, the application control apparatus further includes:
an exit module, configured to, in response to collecting an action matching an exit action, exit the remote control mode; hide the remote control window on the display page, and output mode exit information to prompt the user that the wearable device exits the remote control mode.

According to a fourth aspect, the present application further provides an application control apparatus, including:
an action obtaining module, configured to receive identification information of an application control action sent by a wearable device, where the identification information is sent to a terminal by the wearable device in response to collecting in a remote control mode an action initiated by a user and matching a candidate application control action; and
an instruction execution module, configured to determine and execute a response instruction corresponding to the application control action for a target application according to the identification information of the application control action, and display a target page of the target application under the response instruction on a display page of the terminal.

In an embodiment, the application control apparatus further includes:
an application determining module, configured to, in response to a currently running application being one of a plurality of candidate applications, determine the currently running application as the target application;
a mode recommendation module, configured to output control prompt information and mode recommendation information on the display page, to prompt the user that the target application can be remotely controlled, and to recommend a candidate operation mode corresponding to the target application to a target user.

In an embodiment, the application control apparatus further includes:
a notification receiving module, configured to, in response to receiving mode notification information sent by the wearable device, determine that the wearable device has entered a remote control mode;
an information output module, configured to output mode prompt information on the display page to prompt the user that the wearable device has entered the remote control mode.

In an embodiment, the application control apparatus further includes:
a mode receiving module, configured to receive identification information of a target operation mode sent by the wearable device, where the identification information of the target operation mode is sent by the wearable device when determining, in response to receiving a mode selection action matching a candidate operation mode, the candidate operation mode as a target operation mode; and
an entering prompt module, configured to output operation prompt information on the display page to prompt the user that the wearable device enters the target operation mode;
the instruction execution module is specifically configured to:
determine and execute the response instruction corresponding to the application control action for the target application according to the identification information of the application control action and the identification information of the target operation mode, and display the target page of the target application under the response instruction on the display page of the terminal.

In an embodiment, the application control apparatus further includes:
an instruction configuration module, configured to, in response to receiving an instruction configuration operation input by a user, configure a mapping relationship between the candidate application control action and the response instruction based on the instruction configuration operation.

According to a fifth aspect, the present application provides a computer program product, including a computer program/instruction, where when the computer program/instruction is executed by a processor, the steps of the method in any one of the forgoing embodiments are implemented.

According to a sixth aspect, the present application provides a computer device, including a memory, a processor, and a computer program stored in the memory and executable on the processor, where the processor implements the steps of the method in any one of the foregoing embodiments when executing the program.

According to a seventh aspect, the present application provides a computer-readable storage medium, storing a computer program, where when the program is executed by a processor, the steps of the method in any one of the foregoing embodiments are implemented.

The technical solutions provided by the embodiments of the present invention may include the following beneficial effects.

In the embodiments of the present invention, in response to reception of a remote control request, the wearable device enters a remote control mode, and displays a remote control window on a display page of the wearable device; when an action matched with any candidate application control action in at least one candidate application control action is collected by the wearable device entering the remote control mode, the action is sent to the terminal, the terminal can determine and execute a response instruction of the action for the target application according to the action, so that the target application with a relatively high action frequency and a relatively few action types in the terminal is remotely controlled, and then the user can experience real hands-free operation, that is, the user can frequently control the target application on the terminal without the need to directly operate the terminal device, thereby improving the comfort and convenience of the user in immersive use of the target application.

It should be understood that the above general description and the following detailed description are only exemplary and explanatory, and do not limit the present invention.

### BRIEF DESCRIPTION OF THE DRAWINGS

The accompanying drawings, which are incorporated in and constitute a part of the present invention, illustrate embodiments consistent with the present invention, and together with the specification, serve to explain the principles of the present invention.
FIG. 1 is an application scenario diagram of an application control method according to some exemplary embodiments.
FIG. 2 is a flowchart of an application control method according to some exemplary embodiments.
FIG. 3 is a flowchart of another application control method according to some exemplary embodiments.
FIG. 4 is a block diagram of an application control apparatus according to some exemplary embodiments.
FIG. 5 is a block diagram of another application control apparatus according to some exemplary embodiments.
FIG. 6 is a hardware structural diagram of a computer device according to some exemplary embodiments.

### DETAILED DESCRIPTION

Exemplary embodiments will be described in detail herein, examples of which are illustrated in the accompanying drawings. Where the following description refers to the drawings, unless otherwise indicated, like numerals in different drawings indicate the same or similar elements. The implementations described in the following exemplary embodiments do not represent all implementations consistent with the present invention. Rather, they are merely examples of apparatuses and methods consistent with some aspects of the present invention as detailed in the appended claims.

The terms used in the present disclosure are for the purpose of describing particular embodiments only and are not intended to limit the present invention. The singular forms "a/an", "said", and "the" used in the present disclosure and the appended claims are also intended to include plural forms unless the context clearly indicates other meanings. It should also be understood that the term "and/or" as used herein refers to and encompasses any or all possible combinations of one or more associated listed items.

It should be understood that although the terms first, second, third, etc. may be used in the present invention to describe various information, such information should not be limited to these terms. These terms are only used to distinguish the same type of information from each other. For example, without departing from the scope of the present invention, the first information may also be referred to as second information, and similarly, the second information may also be referred to as first information. Depending on context, the word "if" as used herein may be interpreted as "when" or "while" or "in response to a determination."

Although the development of terminal applications brings many conveniences and functions to users, some terminal applications have limited types of operations, and users need to frequently use fingers to perform operations such as screen swipe and content switching on the terminal to control the terminal applications to execute corresponding instructions.

When a user uses a terminal application in an immersive manner, even if the user places a mobile phone serving as a terminal device in a physical manner, the user still needs to spend additional effort to control the terminal application to execute an instruction through operating the screen, and cannot implement a real hands-free operation, that is, the user can frequently control a target application on the terminal without the need to directly operate the terminal device, which obviously limits the use experience and comfort of the user when using the target application in an immersive manner.

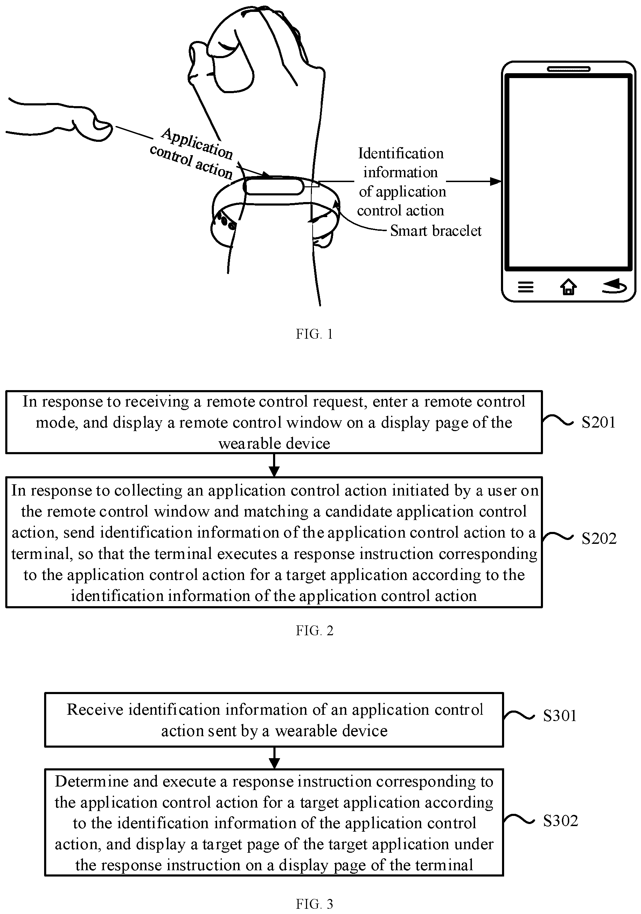

To solve the foregoing problems, the present invention provides an application control method, and the method may be applied to a scenario in which the user uses some terminal applications with a relatively high action frequency and a relatively less action types in an immersive manner. Optionally, as shown in FIG. 1, the method may be completed by cooperation of a wearable device (for example, a smart bracelet or smart glasses) and a terminal device. For example, after the wearable device establishes a connection with the terminal and enters a remote control mode, an action input by the user from the wearable device is sent to the terminal, so as to control the target application currently running on the terminal to execute a response instruction corresponding to the action. In response to receiving the action sent by the wearable device, the terminal controls the target application correspondingly on the terminal according to the action.

Detailed procedures of the method are described below from both sides of the wearable device and the terminal.

A first aspect of the present invention provides an application control method, which may be executed by the side of the wearable device. Referring to FIG. 2, the method specifically includes steps 201 to 202.

In S201, in response to receiving a remote control request, a remote control mode is entered, and a remote control window is displayed on a display page of the wearable device.

The remote control request is used to request the wearable device to enter a remote control mode. The remote control request may be directly sent by the user to the wearable device, or may be initiated by the user on the terminal and transmitted to the wearable device through the terminal. For example, the user may directly initiate a remote control request to the wearable device in a setting interface of the wearable device; or the user may initiate a remote control request for the wearable device in a setting interface of the terminal, and the terminal transmits the remote control request to the wearable device. The remote control window refers to a window displayed on a display page of the wearable device in the remote control mode.

In this embodiment, the remote control mode refers to a mode of performing remote control on the terminal. It should be noted that when the remote control mode is entered, the control of the wearable device according to the application control action collected by the wearable device is stopped. Specifically, the wearable device does not execute an instruction corresponding to the action in response to the collected action, so as to ensure that control of the wearable device is not interfered by remote control. Exemplarily, after entering the remote control mode, the display interface of the wearable device may display a remote control window, for example, a solid color background, to cover other display content on the wearable device, to notify the user that the wearable device has entered the remote control mode, that is, an action currently acting on the wearable device cannot be directly implemented to control the wearable device, but is implemented to remotely control the target application on the terminal.

Optionally, in the case of receiving the remote control request, the wearable device may perform security verification on the user and/or the terminal that initiates the remote control request; and in the case that the user and/or the terminal passes the security verification, the wearable device may directly enter the remote control mode, so that the wearable device can shield the collected action from controlling itself. Further, information indicating that the remote control mode has been entered may be sent to the terminal to notify the terminal that the wearable device has entered the remote control mode.

In S202: in response to collecting an application control action that is initiated by a user on the remote control window and that matches a candidate application control action, identification information of the application control action is sent to a terminal, so that the terminal executes a response instruction corresponding to the application control action for a target application according to the identification information of the application control action.

The candidate application control action refers to a plurality of predefined application control actions applicable to the target application, and may include a swipe, a click, a long press, and the like acting on a screen, and a short press, a long press, and the like acting on a side key. The identification information of the application control action refers to the dedicated information used to identify the application control action, such as the serial number corresponding to the application control action.

Optionally, in response to collecting the application control action acting on the remote control window, the wearable device may compare the collected application control action with each candidate application control action; and in the case of determining that the collected application control action matches any one of the candidate application control actions, identification information of the application control action is sent to the terminal, so that the terminal determines and executes a response instruction of the action for the target application based on a preset mapping relationship between the candidate application control action and the response instruction. Exemplarily, in the case that the application control action is a downward swipe and the target application is a short video application, the terminal determines that the response instruction of the application control action for the short video application is playing a next video based on the preset mapping relationship between the candidate application control action and the response instruction, and then executes an instruction of playing the next video.

In the embodiments of the present invention, in response to receiving the remote control request, the wearable device enters the remote control mode and displays the remote control window on the display page of the wearable device; when the action matching any one of at least one candidate application control action is collected, the wearable device that has entered the remote control mode sends the identification information of the application control action to the terminal, so that the terminal can determine and execute the response instruction of the application control action for the target application according to the identification information of the application control action, so as to remotely control the target application with relatively high action frequency and less action type in the terminal, thereby enabling the user to experience a real hands-free operation, that is, the user can frequently control the target application on the terminal without the need to directly operate the terminal device, which improves the comfort and convenience of the user when using the target application in an immersive manner.

In an exemplary embodiment, in response to receiving a mode selection action initiated by a user on the remote control window and matching a candidate operation mode, the candidate operation mode is determined as a target operation mode, and identification information of the target operation mode is sent to the terminal; and mode prompt information is output on the display page to prompt the user that the wearable device has entered the target operation mode.

The candidate operation mode refers to an operation mode in which the wearable device controls the terminal when entering the remote control mode; and the mode prompt information refers to information for prompting the user to enter the target operation mode. The identification information of the mode selection action refers to dedicated information used to identify the target operation mode, for example, a serial number corresponding to the target operation mode. The candidate operation mode includes a swipe operation mode and a mouse operation mode. The at least one candidate application control action in the swipe operation mode includes a left swipe, a right swipe, an upward swipe, a downward swipe, a single click and a long press acting on a screen, and a short press acting on a side key. The at least one candidate application control action in the mouse operation mode includes a single-finger swipe, a double-finger swipe, a single click and a long press acting on the screen, and a short press acting on the side key. For example, the candidate application control actions in each candidate operation mode and the response instructions corresponding to the candidate application control actions may be shown in Table 1 below.

**Table 1**

| Candidate operation Mode | Candidate application control action | Target application is short video type application | Target application is forum type application |
|---|---|---|---|
| Swipe operation mode | Upward swipe (screen) | Play a previous video | Scroll up details page |
| | Downward swipe (screen) | Play a next video | Scroll down details page |
| | Left swipe (screen) | Switch video module | Browsing interface: intangible mouse light spot is located in the left column in the vertical center of the screen |
| | | | Details interface: |
| | | | Swipe left on the upper half region of the wearable terminal: swipe the picture to the left |
| | | | Swipe left on the lower half region of the wearable terminal: exit the current details page |
| | Right swipe (screen) | Switch video module | Main interface: intangible mouse light spot is located in the right column in the vertical center of the screen |
| | | | Post interface: |
| | | | Swipe right on the upper half region of the wearable terminal: swipe the picture to the right |
| | Single click (screen) | Play/Pause | Click to enter |
| | Long press (screen) | Click "Like" | Click "Like" |
| | Short press (Side key) | Acting on upper key: increase volume by one | Acting on upper key: flip up a page |
| | | Acting on lower key: decrease volume by one | Acting on lower key: flip down a page |
| Mouse operation mode | Single-finger swipe | Mouse light spot movement | Mouse light spot movement |
| | Double-finger swipe | Flip video up and down | Flip up and down details page |
| | Single click short press | Click a mouse light spot area (for example, Attention) | Enter details page |
| | Single click long press | Click a mouse light spot area and long-press (for example, click "Like") | Click a mouse light spot area and long-press (for example, long press to save picture) |
| | Short press (side key) | Acting on upper key: increase volume by one | Acting on upper key: flip up a page |
| | | Acting on lower key: decrease volume by one | Acting on lower key: flip down a page |

It should be noted that the candidate operation modes and the candidate application control actions in each candidate operation mode are not limited to the foregoing several types, and may be configured based on specific situations of each target application on the wearable device and the terminal, which is not limited herein.

Exemplarily, if the action corresponding to the swipe operation mode is continuously pressing the upper key twice, and the action corresponding to the mouse operation mode is continuously pressing the lower key twice; in response to the received action being continuously pressing the upper key twice, that is, the received action matches the swipe operation mode, the swipe operation mode is determined as the target operation mode, and the target operation mode is sent to the terminal; and in response to the received action being continuously pressing the lower key twice, that is, the received action matches the mouse operation mode, the mouse operation mode is determined as the target operation mode, and the target operation mode is sent to the terminal. Further, mode prompt information may be output on a display page of the wearable device (for example, a dialog box displaying a word "Entering the target operation mode" is popped up) to prompt the user that the target operation mode has been entered.

Based on the foregoing embodiments, an implementable manner is provided for the foregoing S202, and in response to collecting an application control action initiated by the user on the remote control window and matching a candidate application control action, identification information of the application control action may be sent to the terminal, so that the terminal executes, for the target application according to the identification information of the application control action and the identification information of the target operation mode, a response instruction corresponding to the application control action.

Optionally, in response to collecting the application control action acting on the remote control window, the wearable device may compare the collected application control action with each candidate application control action; and in the case of determining that the collected application control action matches any one of the candidate application control actions, the identification information of the application control action is sent to the terminal, so that the terminal determines and executes, based on a preset mapping relationship between the candidate application control action in the target operation mode and the response instruction, the response instruction of the application control action for the target application in the target operation mode. Exemplarily, in the case that the target operation mode is the mouse operation mode, the action is downward swipe, and the target application is a short video type application, the terminal determines, based on the preset mapping relationship between the candidate application control action and the response instruction, that the response instruction of the action for the short video application in the mouse operation mode is playing a next video, and then executes the instruction of playing the next video.

It should be noted that, in the case that an action matching any one of at least one candidate operation mode is received, the candidate operation mode is determined as the target operation mode, and the identification information of the target operation mode is sent to the terminal, so that the terminal can more accurately determine and execute a response instruction corresponding to the application control action according to any candidate application control action and the target operation mode, thereby enabling the user to implement a real hands-free operation, that is, the user can frequently control the target application on the terminal without the need to directly operate the terminal device, thereby improving comfort and convenience of the user when using the target application in an immersive manner.

In an exemplary embodiment, the application control method further includes:
in response to receiving an application control action initiated by the user on the remote control window and matching a candidate application control action, presenting an operation track of the application control action on the display page; and/or in response to receiving a mode selection action initiated by the user on the remote control window and matching a candidate operation mode, presenting an operation track of the mode selection action on the display page.

The operation track refers to a trajectory following an operation of the user on the remote control window.

Optionally, in the case that an application control action that is initiated by the user on the remote control window and matches the candidate application control action is received, or a mode selection action that matches the candidate operation mode is received, the track of the application control action and the mode selection action performed by the user on the remote control window may be presented on a display page, so that the user can view the operation track, thereby more intuitively and accurately initiating the application control action and the mode selection action.

In an exemplary embodiment, the above application control method further includes:
in response to collecting an action matching an exit action, exiting the remote control mode; outputting stop control information on the display page to prompt the user to stop controlling the wearable device.

The exit action refers to a preset action for exiting the remote control mode, for example, drawing a specific track (such as a track of the letter "M") on the screen of the wearable device. The stop control information refers to information for prompting the user that control of the wearable device has stopped.

Optionally, in response to collecting an action acting on the wearable device, the wearable device may compare the collected action with an exit action; and in the case that the action matches the exit action, the wearable device may exit the remote control mode, and send information of exiting the remote control mode to the terminal, so as to inform the terminal that the terminal cannot be controlled in the current wearable mode. For example, if the exit action is drawing a track of the letter "M" on the screen of the wearable device, in the case that the similarity between the collected action track acting on the wearable device and the track of the letter "M" is greater than a preset threshold, the remote control mode may be exited, and the information indicating that the remote control mode has been exited is sent to the terminal. Further, stop control information may be output on the display page of the wearable device (for example, a dialog box displaying a word "Have stopped controlling the wearable device" is popped up) to prompt the user that the control of the wearable device has been stopped.

It can be understood that the exit action is preset, the collected action is compared with the exit action, and under the condition that the action matched with the exit action is collected, the remote control mode can be more accurately exited, the interaction experience between the terminal and the wearable device is more effectively enhanced, and the user operation is more natural, convenient and safe.

A second aspect of the present invention provides an application control method, which may be executed by a terminal side. Referring to FIG. 3, the method specifically includes steps 301 to 302.

In S301, identification information of an application control action sent by a wearable device is received.

The identification information is sent to the terminal when the wearable device collects in a remote control mode the application control action initiated by a user on a remote control window and matching a candidate application control action.

In S302, a response instruction corresponding to the application control action is determined and executed for a target application according to the identification information of the application control action, and a target page of the target application under the response instruction is displayed on a display page of the terminal.

The target application refers to an application displayed on a current page of the terminal in some terminal applications (for example, short video type applications, forum type applications, and the like) with high action frequency and few action types. Exemplarily, in the case of determining that the wearable device enters the remote control mode, in response to the currently running application being one of the plurality of candidate applications, the currently running application may be determined as the target application; and then the wearable device remotely controls the target application. The target page refers to a page presented after the response instruction is executed for the target application.

Optionally, after the identification information of the application control action sent by the wearable device is acquired, the response instruction of the application control action for the target application on the terminal may be determined and executed based on the preset mapping relationship between the candidate application control action and the response instruction, and then the target page after the target application executes the response instruction is displayed on the display page of the terminal for the user to watch. Exemplarily, in the case that the application control action is downward swipe and the target application is a short video type application, the terminal determines, based on the preset mapping relationship between the candidate application control action and the response instruction, that the response instruction of the application control action for the short video type application is playing a next video, and then executes an instruction of playing the next video, and plays the next video on the display page of the terminal.

It can be understood that under the condition that the wearable device performs remote control on the terminal, the identification information of the application control action sent by the wearable device is received, and according to the identification information of the application control action, a response instruction of the action for the target application can be determined and executed more accurately, and then the target page after the response instruction is executed is displayed, so that the user can experience a real hands-free operation, and the comfort and convenience of the user in immersive use of the target application are improved.

In an exemplary embodiment, in the case that the user needs to remotely control the target application on the terminal by the wearable device entering the remote control mode, in response to receiving mode notification information sent by the wearable device, it is determined that the wearable device has entered the remote control mode; and mode prompt information is output on the display page to prompt the user that the wearable device has entered the remote control mode.

The mode notification information refers to information for notifying the terminal that the wearable device has entered the remote control mode.

Optionally, after entering the remote control mode, the wearable device may send mode notification information to the terminal; in the case that the mode notification information is received, the terminal may determine that the wearable device has entered the remote control mode, and then may output mode prompt information (for example, a prompt box of "The wearable device may be used for remote control") on the display page of the terminal, to prompt the user that the wearable device has entered the remote control mode, and the terminal may be remotely controlled by using the wearable device.

It should be noted that, by receiving the mode notification information sent by the wearable device, it can be more accurately determined that the wearable device enters the remote control mode, thereby enabling the user to remotely control the terminal by using the wearable device, enabling the user to experience a real hands-free operation, and improving comfort and convenience of the user when using the target application in an immersive manner.

In an exemplary embodiment, the above method may further receive identification information of a target operation mode sent by the wearable device, and then output operation prompt information on the display page to prompt the user that the wearable device enters the target operation mode.

The identification information of the target operation mode is sent by the wearable device in response to determining, when receiving a mode selection action matching a candidate operation mode, the candidate operation mode as the target operation mode.

Based on the foregoing embodiment, an implementable manner is provided for the above S202, and a response instruction corresponding to the application control action may be determined and executed for a target application according to the action and the target operation mode, and a target page of the target application under the response instruction is displayed on the display page of the terminal.

Optionally, in the case that the identification information of the target operation mode sent by the wearable device is received, the response instruction of the action for the target application in the target operation mode is determined and executed based on the preset mapping relationship between the candidate application control action and the response instruction in the target operation mode, and then the target page of the target application after the response instruction is executed is displayed on the display page of the terminal. Exemplarily, in the case that the target operation mode is the mouse operation mode, the action is downward swipe, and the target application is a short video type application, the terminal determines, based on the preset mapping relationship between the candidate application control action and the response instruction, that the response instruction of the action for the short video type application in the mouse operation mode is playing a next video, and then executes an instruction of playing the next video, and plays the next video on a display page of the terminal.

It may be understood that, in the case that the target operation mode sent by the wearable device is received, the terminal can more accurately determine and execute the response instruction corresponding to the action according to any candidate application control action and the target operation mode, so that the user implements a real hands-free operation, thereby improving comfort and convenience of the user when using the target application in an immersive manner.

In an exemplary embodiment, in response to receiving an instruction configuration operation input by a user, the mapping relationship between the candidate application control action and the response instruction may be configured based on the instruction configuration operation.

The instruction configuration operation refers to an operation of performing customized configuration on the action and the instruction input by the user, and may include a customized candidate application control action and a corresponding customized response instruction.

Optionally, in the case that an instruction configuration operation input by a user is received, a customized candidate application control action and a corresponding customized response instruction in the instruction configuration operation may be obtained, and then the customized candidate application control action and the corresponding customized response instruction are added to a preset database, to configure a mapping relationship between the candidate application control action and the response instruction.

It should be noted that, in the case that an instruction configuration operation input by a user is received, a highly personalized and customized operation can be provided for the user by configuring the mapping relationship between the customized candidate application control action and the customized response instruction according to the instruction configuration operation, so that the user can customize the mapping relationship between the candidate application control action and the response instruction according to preferences and requirements of the user, thereby improving use experience and satisfaction of the user in immersive use of the target application.

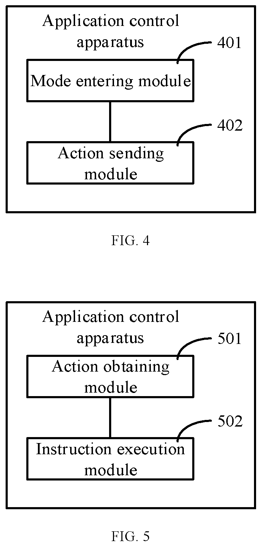

A third aspect of the present invention provides an application control apparatus, referring to FIG. 4, the above application control apparatus includes:
a mode entering module 401, configured to, in response to receiving a remote control request, enter a remote control mode, and display a remote control window on a display page of a wearable device;
an action sending module 402, configured to, in response to collecting an application control action initiated by a user on the remote control window and matching a candidate application control action, send identification information of the application control action to a terminal, so that the terminal executes a response instruction corresponding to the application control action for a target application according to the identification information of the application control action.

In an embodiment, the above application control apparatus further includes:
a mode determining module, configured to, in response to receiving a mode selection action initiated by a user and matching a candidate operation mode, determine the candidate operation mode as a target operation mode, and send identification information of the target operation mode to the terminal; and
a prompt output module, configured to output mode prompt information on the display page to prompt the user that the wearable device has entered the target operation mode;
the above action sending module is specifically configured to:
in response to collecting the application control action initiated by the user on the remote control window and matching the candidate application control action, send the identification information of the application control action to the terminal, so that the terminal executes the response instruction corresponding to the application control action for the target application according to the identification information of the application control action and the identification information of the target operation mode.

In an embodiment, the candidate operation mode includes a swipe operation mode and a mouse operation mode;
the candidate application control action in the swipe operation mode includes a left swipe, a right swipe, an upward swipe, a downward swipe, a single click and a long press acting on a screen, and a short press and a long press acting on a side key;
the candidate application control action in the mouse operation mode includes a single-finger swipe, a two-finger swipe, a single click and a long press acting on the screen, and a short press and a long press acting on the side key.

In an embodiment, the above application control apparatus further includes:
a track presenting module, configured to, in response to receiving the application control action initiated by the user on the remote control window and matching the candidate application control action, present an operation track of the application control action on the display page;
and/or,
in response to receiving the mode selection action initiated by the user on the remote control window and matching the candidate operation mode, present an operation track of the mode selection action on the display page.

In an embodiment, the above application control apparatus further includes:
a control module, configured to, in a case of entering the remote control mode, stop controlling the wearable device according to the application control action collected by the wearable device;
a control stop module, configured to output stop control information on the display page to prompt the user to stop controlling the wearable device.

In an embodiment, the above application control apparatus further includes:
an exit module, configured to, in response to collecting an action matching an exit action, exit the remote control mode; hide the remote control window on the display page, and output mode exit information to prompt the user that the wearable device exits the remote control mode.

A fourth aspect of the present invention provides an application control apparatus, referring to FIG. 5, the above application control apparatus includes:
an action obtaining module 501, configured to receive identification information of an application control action sent by a wearable device, where the identification information is sent to a terminal by the wearable device in response to collecting in a remote control mode the application control action initiated by a user on a remote control window and matching a candidate application control action; and
an instruction execution module 502, configured to determine and execute a response instruction corresponding to the application control action for a target application according to the identification information of the application control action, and display a target page of the target application under the response instruction on a display page of the terminal.

In an embodiment, the above application control apparatus further includes:
an application determining module, configured to, in response to a currently running application being one of a plurality of candidate applications, determine the currently running application as the target application;
a mode recommendation module, configured to output control prompt information and mode recommendation information on the display page, to prompt the user that the target application can be remotely controlled, and to recommend a candidate operation mode corresponding to the target application to a target user.

In an embodiment, the above application control apparatus further includes:
a notification receiving module, configured to, in response to receiving mode notification information sent by the wearable device, determine that the wearable device has entered the remote control mode;
an information output module, configured to output mode prompt information on the display page to prompt the user that the wearable device has entered the remote control mode.

In an embodiment, the above application control apparatus further includes:
a mode receiving module, configured to receive identification information of a target operation mode sent by the wearable device, where the identification information of the target operation mode is sent by the wearable device in response to determining, when receiving a mode selection action matching a candidate operation mode, the candidate operation mode as a target operation mode; and
an entering prompt module, configured to output operation prompt information on the display page to prompt the user that the wearable device enters the target operation mode;
the instruction execution module is specifically configured to:
determine and execute the response instruction corresponding to the application control action for the target application according to the identification information of the application control action and the identification information of the target operation mode, and display the target page of the target application under the response instruction on the display page of the terminal.

In an embodiment, the above application control apparatus further includes:
an instruction configuration module, configured to, in response to receiving an instruction configuration operation input by a user, configure a mapping relationship between the candidate application control action and the response instruction based on the instruction configuration operation.

A fifth aspect of the present invention provides a computer program product, including a computer program/instruction, where when the computer program/instruction is executed by a processor, the method according to any one of the above aspects is implemented.

For the apparatus embodiments and the computer program product embodiments, because they basically correspond to the method embodiments, for related parts, partial descriptions of the method embodiments are referred to. In addition, the apparatus embodiments described above are merely illustrative, where the modules described as separate components may or may not be physically separate, and the components displayed as modules may or may not be physical modules, that is, may be located in one place, or may be distributed to multiple network modules. Some or all of the modules may be selected according to actual needs to achieve the purpose of the solutions of the present invention. Those skilled in the art can understand and implement the present invention without any creative work.

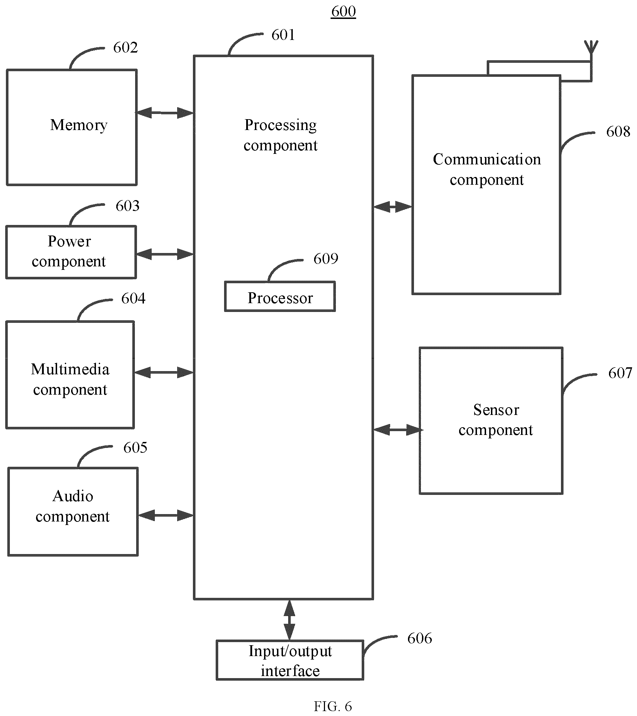

According to a sixth aspect, an embodiment of the application control apparatus provided in the present invention may be applied to a computer device. Referring to FIG. 6, FIG. 6 is a schematic hardware diagram of a computer device. For example, the device 600 may be a mobile phone, a computer, a digital broadcast terminal, a messaging device, a game console, a tablet, a medical device, exercise equipment, a personal digital assistant, and the like.

The device 600 may include one or more of the following components: a processing component 601, a memory 602, a power component 603, a multimedia component 604, an audio component 605, an input/output (I/O) interface 606, a sensor component 607, and a communication component 608.

The processing component 601 typically controls overall operations of the device 600, such as the operations associated with display, telephone calls, data communications, camera operations, and recording operations. The processing component 601 may include one or more processors 609 to execute instructions to perform all or part of the steps of the above described methods. Moreover, the processing component 601 may include one or more modules that facilitate the interaction between the processing component 601 and other components. For instance, the processing component 601 may include a multimedia module to facilitate the interaction between the multimedia component 604 and the processing component 601.

The memory 602 is configured to store various types of data to support the operations at the device 600. Examples of such data include instructions for any applications or methods operating on the device 600, contact data, phonebook data, messages, pictures, videos, etc. The memory 602 may be implemented using any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 603 provides power to various components of the device 600. The power component 603 may include a power management system, one or more power sources, and any other components associated with he generation, management, and distribution of power in the device 600.

The multimedia component 604 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe operation. In some embodiments, the multimedia component 604 includes a front camera and/or a rear camera. The front camera and/or the rear camera can receive external multimedia data while the device 600 is in an operation mode, such as a photographing mode or a video mode. Each of the front camera and the rear camera can be a fixed optical lens system or have focal and optical zoom capability.

The audio component 605 is configured to output and/or input audio signals. For example, the audio component 605 includes a microphone (MIC) configured to receive an external audio signal when the device 600 is in an operation mode, such as a call mode, a recording mode, and a voice recognition mode. The received audio signal may be further stored in the memory 602 or transmitted via the communication component 608. In some embodiments, the audio component 605 further includes a speaker to output audio signals.

The I/O interface 606 provides an interface between the processing component 601 and peripheral interface modules, such as a keyboard, a click wheel, buttons, etc. The buttons may include, but are not limited to, a home button, a volume button, a starting button, and a locking button.

The sensor component 607 includes one or more sensors to provide status assessments of various aspects of the device 600. For instance, the sensor component 607 may detect an open/closed status of the device 600, relative positioning of components, e.g., the display and the keypad, of the device 600, a change in position of the device 600 or a component of the device 600, a presence or absence of user contact with the device 600, an orientation or acceleration/deceleration of the device 600, and a change in temperature of the device 600. The sensor assembly 607 may also include a proximity sensor configured to detect the presence of nearby objects without any physical contact. The sensor assembly 607 may also include a light sensor, such as a CMOS or CCD image sensor, for use in imaging applications. In some embodiments, the sensor assembly 607 may also include an acceleration sensor, a gyroscope sensor, a magnetic sensor, a pressure sensor, or a temperature sensor.

The communication component 608 is configured to facilitate communication, wired or wirelessly, between the device 600 and other devices. The device 600 can access a wireless network based on a communication standard, such as WiFi, 2G or 3G, 4G or 5G, or a combination thereof. In one exemplary embodiment, the communication component 608 receives a broadcast signal or broadcast associated information from an external broadcast management system via a broadcast channel. In one exemplary embodiment, the communication component 608 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described application control method of the computer device.

According to a seventh aspect, in an exemplary embodiment of the present invention, there is also provided a non-transitory computer-readable storage medium including instructions, such as included in the memory 602, executable by the processor 609 in the device 600, for completing the above-described application control method of the computer device. For example, the non-transitory computer-readable storage medium may be a ROM, a random access memory (RAM), a CD-ROM, a magnetic tape, a floppy disk, an optical data storage device, and the like.

Specific embodiments of the present invention are described above. Other embodiments are within the scope of the appended claims. In some cases, the actions or steps recited in the claims may be performed in a different order than in the embodiments and can still achieve desired results. Additionally, the processes depicted in the figures do not necessarily require a particular order or sequential order shown to achieve the desired result. In certain embodiments, multitasking and parallel processing are also possible or may be advantageous.

Other embodiments of the present invention will be readily apparent to those skilled in the art upon consideration of the specification and practice of the present invention. The present invention is intended to cover any modifications, uses, or adaptations of the present invention that follow the general principles of the present invention and include common knowledge or habitual technical means in the technical field not disclosed in the present invention.

It should be understood that the present invention is not limited to the precise structures already described above and shown in the accompanying drawings, and various modifications and changes may be made without departing from the scope thereof. The scope of the present invention is limited only by the appended claims.

The above description is only the preferred embodiments of the present invention, and is not intended to limit the present invention, and any modifications, equivalent substitutions, improvements and the like made within the spirit and principle of the present invention shall fall within the protection scope of the present invention.

## Claims

1. An application control method, comprising:
in response to receiving a remote control request, entering a remote control mode, and displaying a remote control window on a display page of a wearable device; and
in response to collecting an application control action initiated by a user on the remote control window and matching a candidate application control action, sending identification information of the application control action to a terminal, so that the terminal executes a response instruction corresponding to the application control action for a target application according to the identification information of the application control action.

2. The method according to claim 1, further comprising:
in response to receiving a mode selection action initiated by a user on the remote control window and matching a candidate operation mode, determining the candidate operation mode as a target operation mode, and sending identification information of the target operation mode to the terminal;
outputting mode prompt information on the display page to prompt the user that the wearable device has entered the target operation mode;
sending the identification information of the application control action to the terminal in response to collecting the application control action initiated by the user on the remote control window and matching the candidate application control action comprises:
in response to collecting the application control action initiated by the user on the remote control window and matching the candidate application control action, sending the identification information of the application control action to the terminal, so that the terminal executes the response instruction corresponding to the application control action for the target application according to the identification information of the application control action and the identification information of the target operation mode.

3. The method according to claim 1 or 2, wherein the candidate operation mode comprises a swipe operation mode and a mouse operation mode;
the candidate application control action in the swipe operation mode comprises a left swipe, a right swipe, an upward swipe, a downward swipe, a single click and a long press acting on a screen, and a short press and a long press acting on a side key;
the candidate application control action in the mouse operation mode comprises a single-finger swipe, a two-finger swipe, a single click and a long press acting on the screen, and a short press and a long press acting on the side key.

4. The method according to any one of the preceding claims , further comprising:
in response to receiving the application control action initiated by the user on the remote control window and matching the candidate application control action, presenting an operation track of the application control action on the display page;
and/or,
in response to receiving the mode selection action initiated by the user on the remote control window and matching the candidate operation mode, presenting an operation track of the mode selection action on the display page.

5. The method according to any one of the preceding claims , further comprising:
in a case of entering the remote control mode, stopping controlling the wearable device according to the application control action collected by the wearable device;
outputting stop control information on the display page to prompt the user to stop controlling the wearable device.

6. The method according to any one of the preceding claims , further comprising:
in response to collecting an action matching an exit action, exiting the remote control mode;
hiding the remote control window on the display page, and outputting mode exit information to prompt the user that the wearable device exits the remote control mode.

7. An application control method, comprising:
receiving identification information of an application control action sent by a wearable device, wherein the identification information is sent to a terminal by the wearable device in response to collecting in a remote control mode the application control action initiated by a user on a remote control window and matching a candidate application control action; and
determining and executing a response instruction corresponding to the application control action for a target application according to the identification information of the application control action, and displaying a target page of the target application under the response instruction on a display page of the terminal.

8. The method according to claim 7, further comprising:
in response to a currently running application being one of a plurality of candidate applications, determining the currently running application as the target application;
outputting control prompt information and mode recommendation information on the display page, to prompt the user that the target application can be remotely controlled, and to recommend a candidate operation mode corresponding to the target application to a target user.

9. The method according to claim 7 or 8, further comprising:
in response to receiving mode notification information sent by the wearable device, determining that the wearable device has entered the remote control mode;
outputting mode prompt information on the display page to prompt the user that the wearable device has entered the remote control mode.

10. The method according to any one of claims 7 to 9, further comprising:
receiving identification information of a target operation mode sent by the wearable device, wherein the identification information of the target operation mode is sent by the wearable device in response to determining, when receiving a mode selection action matching a candidate operation mode, the candidate operation mode as a target operation mode; and
outputting operation prompt information on the display page to prompt the user that the wearable device enters the target operation mode;
determining and executing the response instruction corresponding to the application control action for the target application according to the identification information of the application control action, and displaying the target page of the target application under the response instruction on the display page of the terminal comprises:
determining and executing the response instruction corresponding to the application control action for the target application according to the identification information of the application control action and the identification information of the target operation mode, and displaying the target page of the target application under the response instruction on the display page of the terminal.

11. The method according to any one of claims 7 to 10, further comprising:
in response to receiving an instruction configuration operation input by a user, configuring a mapping relationship between the candidate application control action and the response instruction based on the instruction configuration operation.

12. An application control apparatus, comprising:
a mode entering module, configured to, in response to receiving a remote control request, enter a remote control mode, and display a remote control window on a display page of a wearable device; and
an action sending module, configured to, in response to collecting an application control action initiated by a user on the remote control window and matching a candidate application control action, send identification information of the application control action to a terminal, so that the terminal executes a response instruction corresponding to the application control action for a target application according to the identification information of the application control action.

13. An application control apparatus, comprising:
an action obtaining module, configured to receive identification information of an application control action sent by a wearable device, wherein the identification information is sent to a terminal by the wearable device in response to collecting in a remote control mode an action initiated by a user and matching a candidate application control action; and
an instruction execution module, configured to determine and execute a response instruction corresponding to the application control action for a target application according to the identification information of the application control action, and display a target page of the target application under the response instruction on a display page of the terminal.

14. A computer program product, comprising a computer program/instruction, wherein when the computer program/instruction is executed by a processor, the method according to any one of claims 1 to 11 is implemented.

15. A computer device, comprising a memory, a processor, and a computer program stored in the memory and executable on the processor, wherein the processor, when executing the program, implements the method according to any one of claims 1 to 11.

## Amended claims

### Amended claims in accordance with Rule 137(2) EPC.

1. An application control method, comprising:
in response to receiving a remote control request, entering a remote control mode, and displaying a remote control window on a display page of a wearable device (S201); and
in response to collecting an application control action initiated by a user on the remote control window and matching a candidate application control action, sending (S202) identification information of the application control action to a terminal, so that the terminal executes a response instruction corresponding to the application control action for a target application according to the identification information of the application control action;
wherein the method further comprises:
in response to receiving a mode selection action initiated by a user on the remote control window and matching a candidate operation mode, determining the candidate operation mode as a target operation mode, and sending identification information of the target operation mode to the terminal;
outputting mode prompt information on the display page to prompt the user that the wearable device has entered the target operation mode;
sending (S202) the identification information of the application control action to the terminal in response to collecting the application control action initiated by the user on the remote control window and matching the candidate application control action comprises:
in response to collecting the application control action initiated by the user on the remote control window and matching the candidate application control action, sending the identification information of the application control action to the terminal, so that the terminal executes the response instruction corresponding to the application control action for the target application according to the identification information of the application control action and the identification information of the target operation mode.

2. The method according to claim 1, wherein the candidate operation mode comprises a swipe operation mode and a mouse operation mode;
the candidate application control action in the swipe operation mode comprises a left swipe, a right swipe, an upward swipe, a downward swipe, a single click and a long press acting on a screen, and a short press and a long press acting on a side key;
the candidate application control action in the mouse operation mode comprises a single-finger swipe, a two-finger swipe, a single click and a long press acting on the screen, and a short press and a long press acting on the side key.

3. The method according to any one of the preceding claims, further comprising:
in response to receiving the application control action initiated by the user on the remote control window and matching the candidate application control action, presenting an operation track of the application control action on the display page;
and/or,
in response to receiving the mode selection action initiated by the user on the remote control window and matching the candidate operation mode, presenting an operation track of the mode selection action on the display page.

4. The method according to any one of the preceding claims, further comprising:
in a case of entering the remote control mode, stopping controlling the wearable device according to the application control action collected by the wearable device;
outputting stop control information on the display page to prompt the user to stop controlling the wearable device.

5. The method according to any one of the preceding claims, further comprising:
in response to collecting an action matching an exit action, exiting the remote control mode;
hiding the remote control window on the display page, and outputting mode exit information to prompt the user that the wearable device exits the remote control mode.

6. An application control method, comprising:
receiving (S301) identification information of an application control action sent by a wearable device, wherein the identification information is sent to a terminal by the wearable device in response to collecting in a remote control mode the application control action initiated by a user on a remote control window and matching a candidate application control action and
determining and executing a response instruction corresponding to the application control action for a target application according to the identification information of the application control action, and displaying a target page of the target application under the response instruction on a display page of the terminal (S302);
wherein the method further comprises:
receiving identification information of a target operation mode sent by the wearable device, wherein the identification information of the target operation mode is sent by the wearable device in response to determining, when receiving a mode selection action matching a candidate operation mode, the candidate operation mode as a target operation mode; and
outputting operation prompt information on the display page to prompt the user that the wearable device enters the target operation mode;
determining and executing the response instruction corresponding to the application control action for the target application according to the identification information of the application control action, and displaying the target page of the target application under the response instruction on the display page of the terminal (S302) comprises:
determining and executing the response instruction corresponding to the application control action for the target application according to the identification information of the application control action and the identification information of the target operation mode, and displaying the target page of the target application under the response instruction on the display page of the terminal.

7. The method according to claim 6, further comprising:
in response to a currently running application being one of a plurality of candidate applications, determining the currently running application as the target application;
outputting control prompt information and mode recommendation information on the display page, to prompt the user that the target application can be remotely controlled, and to recommend a candidate operation mode corresponding to the target application to a target user.

8. The method according to claim 6 or 7, further comprising:
in response to receiving mode notification information sent by the wearable device, determining that the wearable device has entered the remote control mode;
outputting mode prompt information on the display page to prompt the user that the wearable device has entered the remote control mode.

9. The method according to any one of claims 6 to 8, further comprising:
in response to receiving an instruction configuration operation input by a user, configuring a mapping relationship between the candidate application control action and the response instruction based on the instruction configuration operation.

10. An application control apparatus, comprising:
a mode entering module (401), configured to, in response to receiving a remote control request, enter a remote control mode, and display a remote control window on a display page of a wearable device; and
an action sending module (402), configured to, in response to collecting an application control action initiated by a user on the remote control window and matching a candidate application control action, send identification information of the application control action to a terminal, so that the terminal executes a response instruction corresponding to the application control action for a target application according to the identification information of the application control action;
wherein the application control apparatus further comprises:
a mode determining module, configured to, in response to receiving a mode selection action initiated by a user and matching a candidate operation mode, determine the candidate operation mode as a target operation mode, and send identification information of the target operation mode to the terminal; and
a prompt output module, configured to output mode prompt information on the display page to prompt the user that the wearable device has entered the target operation mode
wherein the action sending module (402) is further configured to:
in response to collecting the application control action initiated by the user on the remote control window and matching the candidate application control action, send the identification information of the application control action to the terminal, so that the terminal executes the response instruction corresponding to the application control action for the target application according to the identification information of the application control action and the identification information of the target operation mode.

11. An application control apparatus, comprising:
an action obtaining module (501), configured to receive identification information of an application control action sent by a wearable device, wherein the identification information is sent to a terminal by the wearable device in response to collecting in a remote control mode an action initiated by a user and matching a candidate application control action; and
an instruction execution module (502), configured to determine and execute a response instruction corresponding to the application control action for a target application according to the identification information of the application control action, and display a target page of the target application under the response instruction on a display page of the terminal;
wherein the application control apparatus further comprises:
a mode receiving module, configured to receive identification information of a target operation mode sent by the wearable device, where the identification information of the target operation mode is sent by the wearable device in response to determining, when receiving a mode selection action matching a candidate operation mode, the candidate operation mode as a target operation mode; and
an entering prompt module, configured to output operation prompt information on the display page to prompt the user that the wearable device enters the target operation mode;
wherein the instruction execution module (502) is further configured to:
determine and execute the response instruction corresponding to the application control action for the target application according to the identification information of the application control action and the identification information of the target operation mode, and display the target page of the target application under the response instruction on the display page of the terminal.

12. A computer program product, comprising a computer program/instruction, wherein when the computer program/instruction is executed by a processor, the method according to any one of claims 1 to 9 is implemented.
